# EUROPEAN PATENT APPLICATION

(11) **EP 2 772 429 A1**
(43) Date of publication of application: **03.09.2014**
(21) Application number: 14153034.5
(22) Date of filing: 29.01.2014
(51) Int. Cl.: B64C 27/08, B64C 39/02

(54) **Four-rotor aircraft**

(30) Priority: 28.02.2013 CN 201310063576; 19.03.2013 DE 202013101170 U
(71) Applicant: Shenzhen Hubsan Technology Co., Ltd., 523718 Dong guan (CN)
(72) Inventor: Zhou, Qiangwu, Futian District Shenzhen, (CN); Zhou, Shidong, Futian District Shenzhen, (CN); Chen, Guangyao, Futian District Shenzhen, (CN)
(74) Representative: Rupprecht, Kay

(57) **Abstract**

The present invention relates to a four-rotor aircraft comprising an upper cowling **(5)** having a first upper arm **(51)** and a second upper arm **(52);** and a lower cowling **(6)** having a first lower arm **(61)** and a second lower arm **(62),** wherein the first upper arm **(51)** and the first lower arm **(61)** comprise a first upper shell and a first lower shell respectively, wherein the second upper arm **(52)** and the second lower arm **(62)** comprise a second upper shell and a second lower shell respectively, wherein the first upper shell is connected to the first lower shell, and wherein the second upper shell is connected to the second lower shell, and wherein the upper cowling **(5)** is thereby secured to the lower cowling **(6).**

## Description

### Technical field of the invention

The disclosure herein relates to vertical take-off and landing (VTOL) aircraft.

### Description of the prior art

Four-rotor aircraft such as helicopters have found applications in both military and civilian markets. One type of aircraft generally known as a four-rotor aircraft is for example made for entertainment purposes. However, four-rotor aircraft are by no means limited to toys or remotely controlled models. Four-rotor aircraft can also be used in surveying, surveillance and aerial photography.

Many conventional four-rotor aircraft comprise a great number of components distributed throughout the entire aircraft. Exemplary components include carbon fiber plates, carbon fiber rods and aluminum alloy plates. These components usually have complex shapes. The number and the complexity to the components render these conventional four-rotor aircraft less crash-resistant, less deformation-resistant, less wind-resistant, less fatigue resistant, less agile and/or less controllable (especially when performing complex maneuvers).

### Summary of the invention

The objective of the present invention is to overcome the shortcomings of the prior art and provide a four-rotor aircraft which can be easily assembled and which has high resistance against crashing, deforming, wind, fatigue and/or high agility and/or controllability.

The four-rotor aircraft comprises: an upper cowling having a first upper arm and a second upper arm and a lower cowling having a first lower arm and a second lower arm.

The first upper arm and the first lower arm comprise a first upper shell and a first lower shell respectively. The second upper arm and the second lower arm comprises a second upper shell and a second lower shell respectively.

The first upper shell is connected to the first lower shell and the second upper shell is connected to the second lower shell, thereby securing the upper cowling to the lower cowling.

At least one of the first upper shells and second upper shells comprises slots and recesses, and at least one of the first lower shells and second lower shells comprises projections and steps. The projections engage with the slots and the steps engage with the recesses.

The lower cowling comprises a battery seating, with said battery seating being designed so as to detachably connect the battery to the lower cowling.

The upper cowling has a pocket at each end of the first upper arm and second upper arm, said pocket being configured so as to accommodate one or more electric motor(s).

The four-rotor aircraft further comprises a printed circuit board configured to: receive satellite and remote control signals; transmit signals to satellites and remote control devices; control the location, speed, heading and trajectory of the four-rotor aircraft; process image signals; or combinations thereof.

The printed circuit board is mounted to the upper cowling.

The four-rotor aircraft further comprises solar panels.

The four-rotor aircraft moreover comprises two first electric motors mounted on the first upper arm and two second electric motors mounted on the second upper arm.

The two first electric motors of the four-rotor aircraft rotate clockwise and the two second electric motors rotate counter-clockwise. Or the two first electric motors rotate counter-clockwise and the two second electric motors rotate clockwise.

The rotors mounted on the respective first electric motor and respective second electric motor are covered.

The rotors mounted on the respective first electric motor are a mirror image of the rotors mounted on the respective second electric motor.

The axis of the first electric motor and the axis of the second electric motor are parallel to each other and situated on the same cylindrical surface.

The rotation of the rotors creates the lifting force.

The four-rotor aircraft further comprises a battery.

The battery is a rechargeable lithium-ion battery.

The battery is designed such that it can be removably inserted on one side of the four-rotor aircraft.

The lower cowling further comprises one or more rib(s), said rib(s) being designed so as to prevent accidental release of the battery from the four-rotor aircraft.

The four-rotor aircraft moreover comprises a battery holder with the battery holder being mounted in the lower cowling and the battery disposed in the battery holder. The battery insertion opening of the battery holder is provided on the side of the four-rotor aircraft. The battery is designed such that it can be removably inserted into the battery holder through the battery insertion opening. An elastic plug is arranged on the battery insertion opening of the battery holder. The elastic plug is designed so as to prevent the battery from sliding out of the battery holder.

The four-rotor aircraft further comprises an electronic video recording module. The electronic video recording module comprises a camera and is disposed on the lower cowling between the lower cowling and the battery holder. A mounting slot for the camera is provided on the battery holder into which the camera is mounted. A through hole for the camera is provided on the lower cowling and the camera is passed through the camera through hole. The camera is secured between the inner hole shoulder of the camera through hole and the camera mounting slot. A jack bar is provided on the side of the battery holder corresponding to the lower cowling. The electronic video recording module is positioned between the jack bar and the lower cowling.

The lowest end parts of the first upper arm and the second upper arm of the upper cowling of the four-rotor aircraft are lower than the lowest end of the lower cowling so as to form the start and landing support legs for the four-rotor aircraft and a soft rubber mat is provided on the base of the start and landing support legs. A single-piece T-shaped chuck is provided at the lower end of the start and landing support legs. The soft rubber mat is snapped into the T-shaped chuck accordingly. A continuous cable groove is further provided on the T-shaped chuck, the continuous cable groove being concealed within the soft rubber mat.

A power cable receiving slot is provided on the first upper arm and the second upper arm respectively, by means of which the end and the upper cowling are connected. The size of the power cable receiving slot corresponds to the size of the individual power cable. The power cable passes through the power cable receiving slot and is secured and tensioned in the power cable receiving slot. The power cable receiving slot is connected to the cable groove on the T-shaped chuck. The first upper arm, the second upper arm, the first lower arm and the second lower arm have a triangular structure.

An LED lamp is disposed at each end of the first upper arm and second upper arm and each luminiferous end of the LED lamp is positioned vertically upward. An insertion slot for the cable of the LED lamp is provided on the outermost side of each end of the first upper arm and the second upper arm. The insertion slot is connected to the cable groove on the T-shaped chuck. The cable of the LED lamp is inserted into the insertion slot and connected to the upper cowling via the cable groove and the power cable receiving slot.

A heat dissipation and weight reduction hole is provided at each end of the first upper arm and the second upper arm of the upper cowling for the electric motor.

The inner diameter of the pocket at each end of the first upper arm and the second upper arm for receiving the electric motor is smaller than the caliber. There is interference fit between the electric motor and the pocket.

The interfitting socket and plug post are provided on the first upper arm and second upper arm of the upper cowling and on the corresponding first lower arm and second lower arm of the lower cowling. The corresponding plug post between the first upper arm and the first lower arm plugs into the socket and the corresponding plug post between the second upper arm and the second lower arm plugs into the socket.

A cut-out hole is provided on the lower cowling.

The four-rotor aircraft also comprises a protective covering and the rotors of the four-rotor aircraft are disposed within said protective covering. The mounting support of the protective covering is attached to the part of the electric motor projecting from the first upper arm and the second upper arm. The mounting support of the protective covering is disposed beneath the rotors' surface of rotation.

With the above-cited structure, the four-rotor aircraft of the present invention has a simple structure and assembly and exhibits the following properties: high resistance against crashing, deforming, wind, fatigue and/or high agility and/or controllability.

### Brief description of the figures

**Fig. 1** is an exploded view of a four-rotor aircraft according to one embodiment.
**Fig. 2A** is a further exploded view of a four-rotor aircraft.
**Fig. 2B** shows details of the shells on the housing of a four-rotor aircraft according to the embodiment.
**Fig. 3** shows the four-rotor aircraft with an inserted battery.
**Fig. 4** shows the rotational direction of the electric motor and rotors of the four-rotor aircraft.
**Fig. 5** is a view of the four-rotor aircraft from below.
**Fig. 6A** is a schematic exploded view of a start and landing support leg of a four-rotor aircraft.
**Fig. 6B** is a schematic sectional view of a start and landing support leg of a four-rotor aircraft.
**Fig. 7** is a schematic sectional view of an LED lamp of a four-rotor aircraft.
**Fig. 8A** is a plan view of the protective covering set-up of a four-rotor aircraft.
**Fig. 8B** is a schematic cross-sectional view along A-A from **Fig. 8A**
**Fig. 9** is a schematic view of the positioning of the electric motor and the alignment of the hole and the post on the covering of a four-rotor aircraft.
**Fig. 10** is a schematic exploded view of a further embodiment of a four-rotor aircraft.
**Fig. 11** is a schematic exploded view of the **Fig. 10** embodiment from a different angle.
**Fig. 12** is a schematic cross-sectional view of the mating of the first upper arm and second upper arm and of the first lower arm and second lower arm of a four-rotor aircraft.

### Detailed description of the embodiments

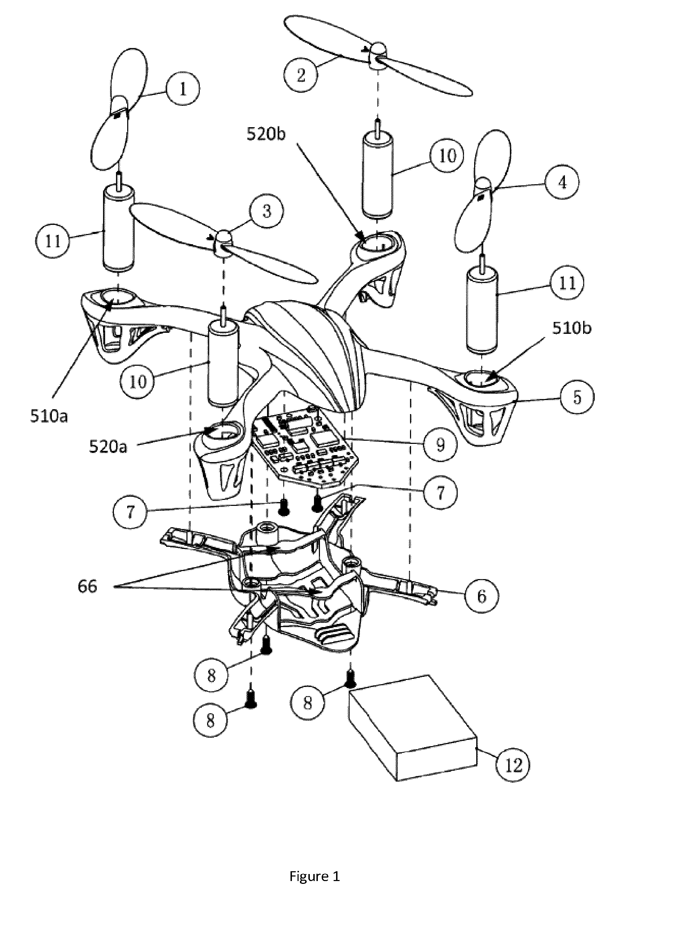

**Fig. 1** is an exploded view of a four-rotor aircraft according to one embodiment.

The four-rotor aircraft comprises an upper cowling **5,** lower cowling **6,** printed circuit board **9,** one or more electric motors **10** and **11,** a battery **12** and four rotors **1, 2, 3** and **4.** The four-rotor aircraft can further comprise one or more screws **8** and **7.**

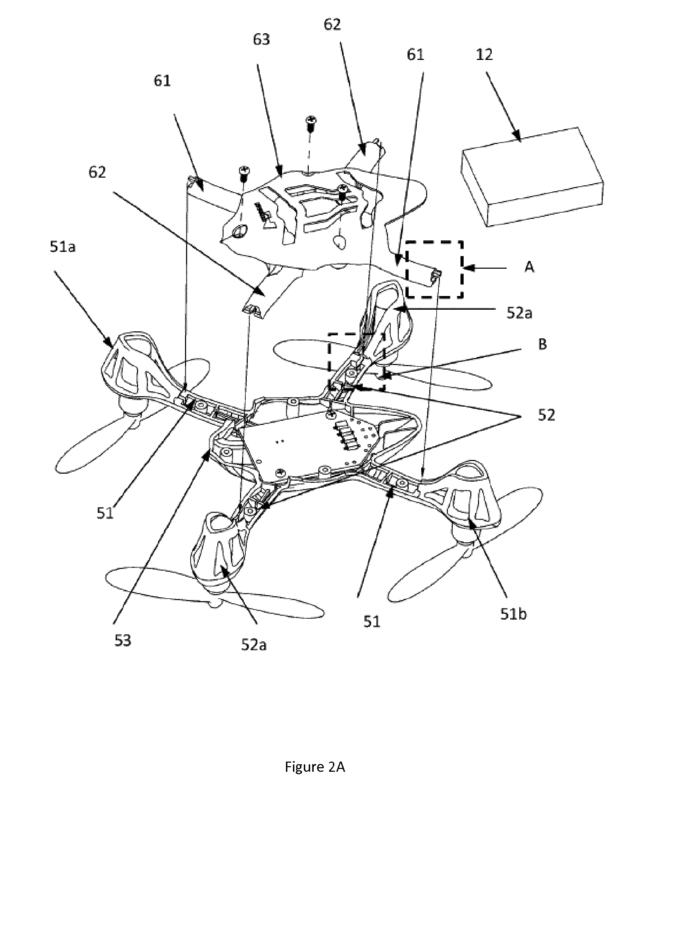

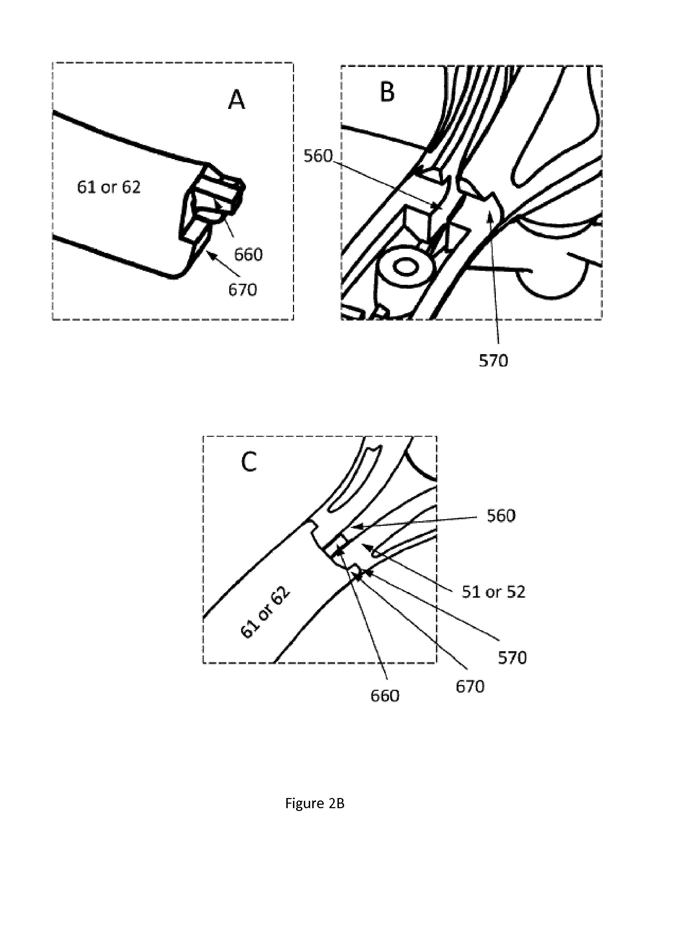

**Fig. 2A** is another exploded view of a four-rotor aircraft. As shown in **Figs. 1** **and** **2****,** the upper cowling **5** comprises a first upper arm **51,** a second upper arm **52** and a body **53.** The first and second upper arms **51** and **52** are connected to the body **53** and the first and second upper arms **51** and **52** cross each other. Pockets **510a** and **510b** can be provided on each end **51a** and **51b** of the first upper arm **51.** The pockets **510a** and **510** are configured so as to accommodate the electric motor **11 or** any drive mechanism. Pockets **520a** and **520b** can be provided on each end **52a** and **52b** of the second upper arm **51.** The pockets **520a** and **520b** thereby serve to accommodate the electric motor **10** or any drive mechanism.

As shown in **Figs. 1** **and** **2****,** the lower cowling **6** comprises a first lower arm **61,** a second lower arm **62** and a body **63.** The first lower arm **61** corresponds to the first upper arm **51** of the upper cowling **5** and the second lower arm **62** corresponds to the second upper arm **52.** In the present embodiment, the lower cowling comprises the battery seating **66,** with the battery seating being designed to removably secure the battery **12** to the lower cowling 6.

According to the present embodiment, each end of the first and second lower arms **61** and **62** and each end of the first and second upper arms **51** and **52** comprise a shell and are configured to connect to one another when the upper cowling **5** and the lower cowling **6** are assembled. **Fig. 2B** shows details of the shell according to the embodiment. Plate A in **Fig. 2B** corresponds to the dotted box A in **Fig. 2A** and shows details of the shell on arm **61** and **62.** Plate B in **Fig. 2B** corresponds to the dotted box B in **Fig. 2A** and shows details of the shell on arm **51** and **52.** The shells of the lower arms **61** and **62** comprise the projection **660.** The projection **660** is narrower than the lower arms **61** and **62.** The shells on the lower arms **61** and **62** comprise steps **670** displaced from the projection. The shells on the upper arms **51** and **52** comprise a slot **560** and a recess **570.** The slot **560** is essentially the same width as the projection **660.** When the upper cowling **5** and the lower cowling **6** are assembled, the shells on the lower arms **61** and **62** connect to the shells on the upper arms **51** and **52,** thereby securing the upper cowling **5** to the lower cowling **6.** Specifically, the projection **660** engages with the slot **560** and the steps **670** engage with the recess **570.** See plate C in **Fig. 2B****.** The upper cowling 5 may be further secured to the lower cowling **6** by screws **8.**

The printed circuit board **9** can be mounted to the upper cowling **5** using any suitable method such as, for example, screws **7** clips or adhesive. For example, the printed circuit board **9** can be mounted underneath the body **53** of the upper cowling **5.** The printed circuit board **9** can comprise any suitable components such as, for example, remote control trans-mission module, antenna, microprocessor, memory, amplifier, GPS receiver, altitude meter and camera. The printed circuit board can be configured to perform the following functions: receive signals from satellites and remote control devices; transmit signals to satellites and remote control devices; control the location, speed, heading and trajectory of the four-rotor aircraft; process image signals; and drive the electric motors **10** and **11.** The printed circuit board can be powered by any suitable power source such as the battery **12** or solar panels.

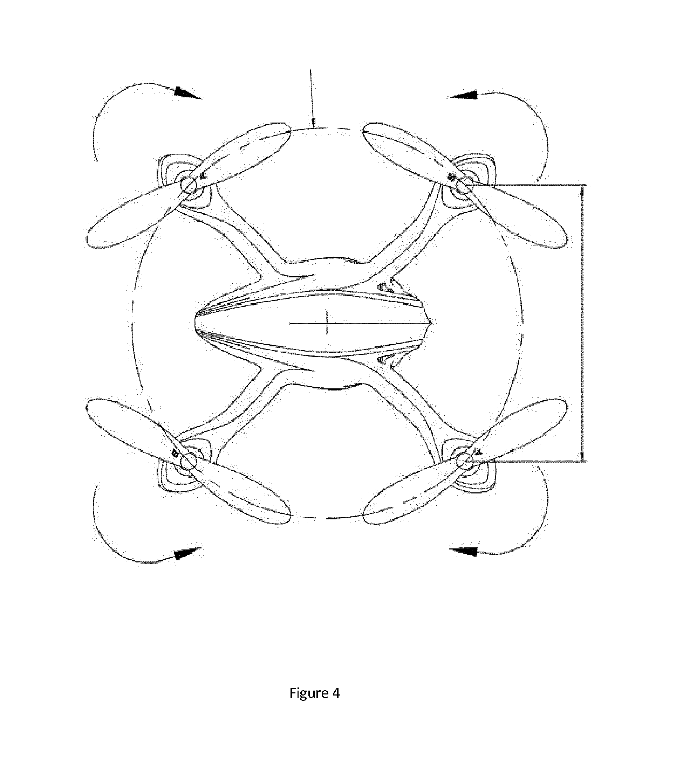

As shown **in** **Fig. 4****,** the electric motors **10** mounted in pockets **520a** and **520b** are configured to rotate in the same direction. The electric motors **11** mounted in pockets **510a** and **510b** are configured to rotate in the same direction but in the opposite direction from that of electric motors **10.** Namely, the electric motor mounted on one arm of the upper cowling **5** rotates clockwise and the motor mounted on the other arm of the upper cowling **5** rotates counterclockwise, or vice versa. The axes of the electric motors **10** and **11** are parallel to each other and are located on the same cylindrical surface.

Rotors **2** and **3** are mounted on electric motor **10** and rotors **1** and **4** are mounted on electric motor **11.** In the present embodiment, the rotors **2** and **3** have the same angle of attack as rotors **1** and **4.** Because rotors **2** and **3** rotate in the opposite direction from rotors **1** and **4,** all the rotors **1** to **4** produce lift when rotating, the blades on rotors **2** and **3** rotating opposite to their hubs. Rotors **2** and **3** can be viewed as a mirror image of rotors **1** and **4.**

The battery **12** can be any applicable battery such as e.g. a rechargeable lithium-ion battery.

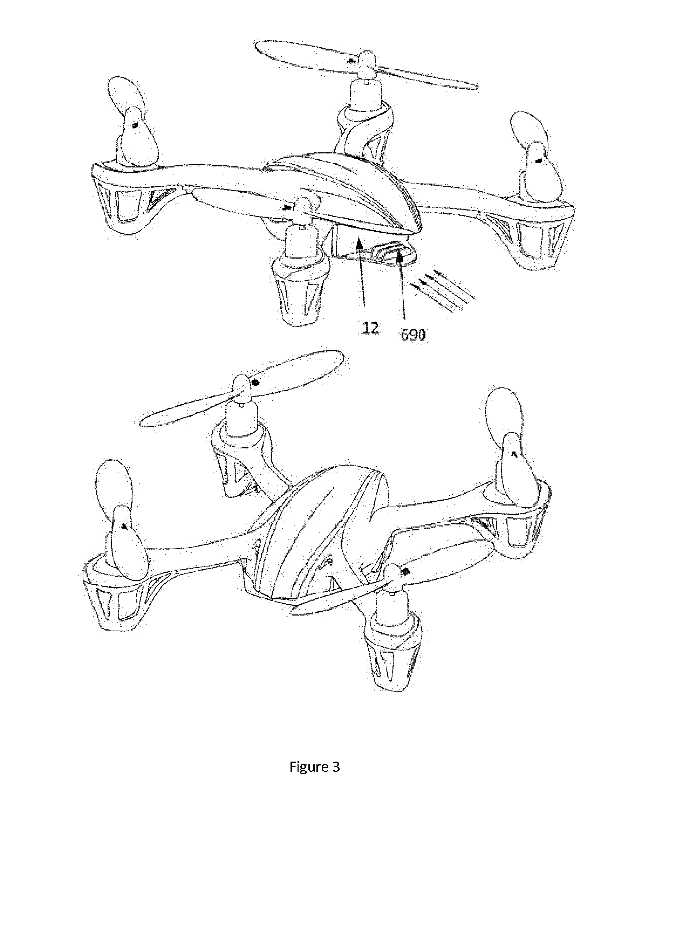

As shown in **Fig. 3****,** the lower cowling **6** and the upper cowling **5** are shaped such that when assembled, the battery **12** can be removably inserted into the battery seating **66** from one side of the aircraft (e.g. in the direction of the four parallel arrows on the upper plate of **Fig. 3****).** The lower cowling **6** or the upper cowling **5** can further comprise one or more rib(s) **690** configured to prevent accidental release of the battery from the four-rotor aircraft.

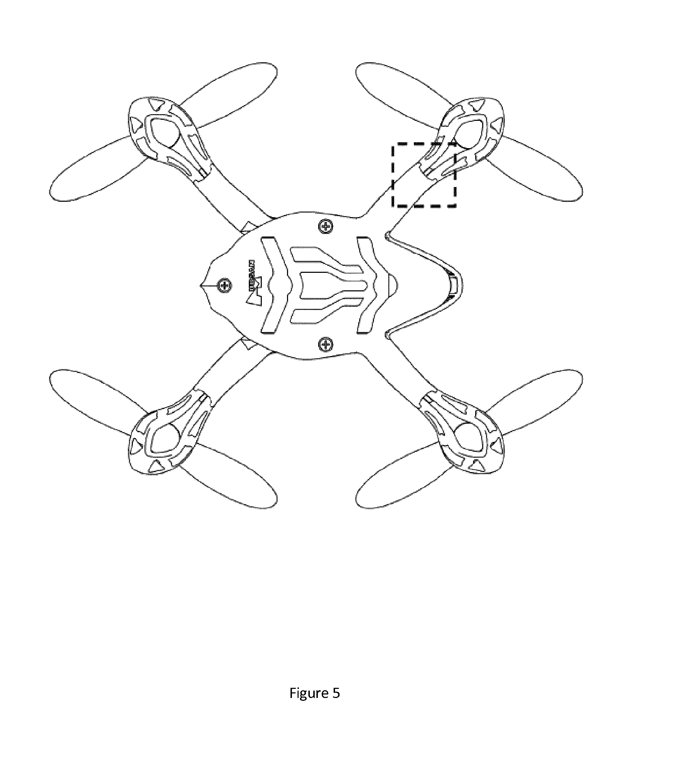

**Fig. 5** shows a view of the aircraft from below. Details of the dotted area are shown in plate C in **Fig. 2B****.**

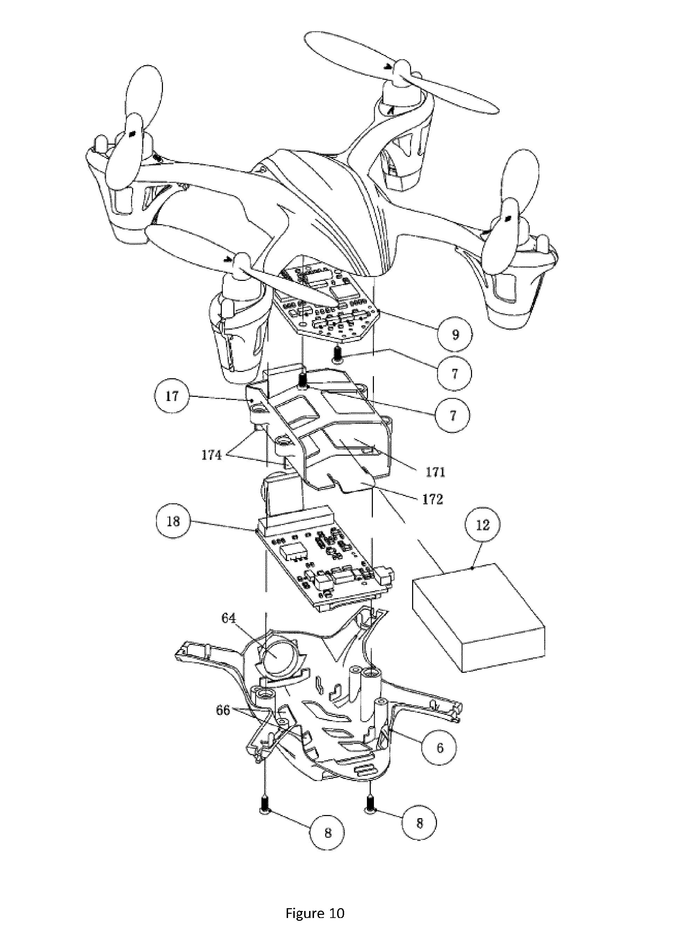

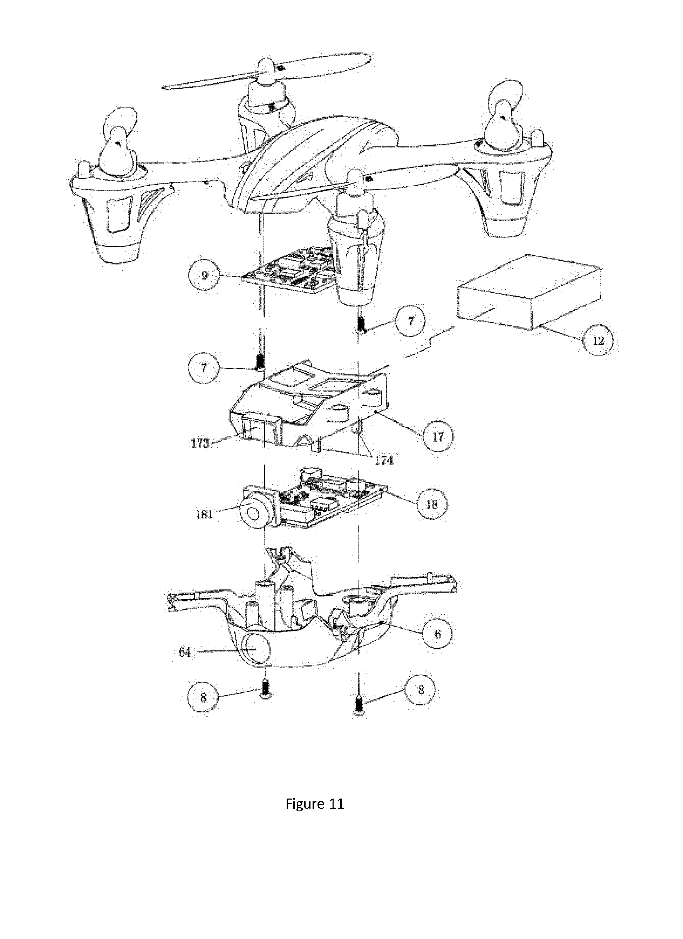

In the embodiment depicted in **Figs. 10** **and** **11****,** the four-rotor aircraft further comprises a battery holder **17** between the upper cowling **5** and the lower cowling **6** with the battery holder being mounted in the lower cowling **6.** The battery **12** is arranged in the battery holder **17.** The battery insertion opening **171** of the battery holder is provided on the side of the four-rotor aircraft. The battery **12** is designed such that it can be removably inserted into the battery holder **17** through the battery insertion opening **171.** An elastic plug **172** is disposed at the battery insertion opening **171** of the battery holder. The elastic plug **172** is configured so as to prevent the battery **12** from sliding out of the battery holder **17.**

In the embodiment depicted in **Figs. 10** **and** **11****,** the four-rotor aircraft further comprises an electronic video recording module **18.** The electronic video recording module **18** comprises a camera **181** and is disposed on the lower cowling **6.** The electronic video recording module **18** is arranged on the lower cowling **6** between the lower cowling **6** and the battery holder **17.** A mounting slot for the camera **173** is provided on the battery holder **17.** The camera **181** is inserted into the camera mounting slot **173.** A camera through hole **64** is provided on the lower cowling **6** and the camera **181** is passed through the camera through hole **64.** The camera **181** is secured between the inner hole shoulder of the camera through hole **64** and the camera mounting slot **173.** A jack bar **174** for securing the electronic video recording module **18** is provided on the side of the battery holder **17** corresponding to the lower cowling **6.** The electronic video recording module **18** is positioned between the jack bar **174** and the lower cowling **6.**

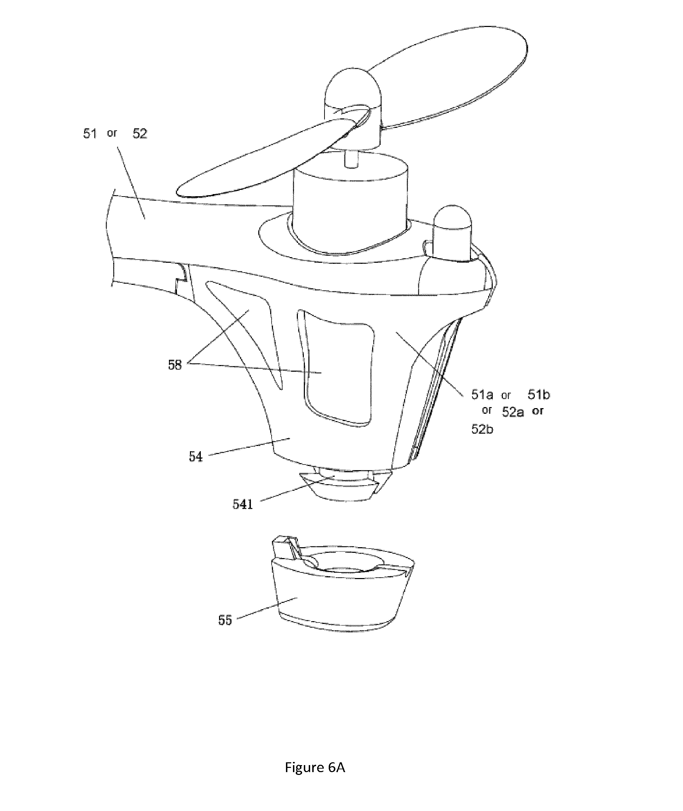

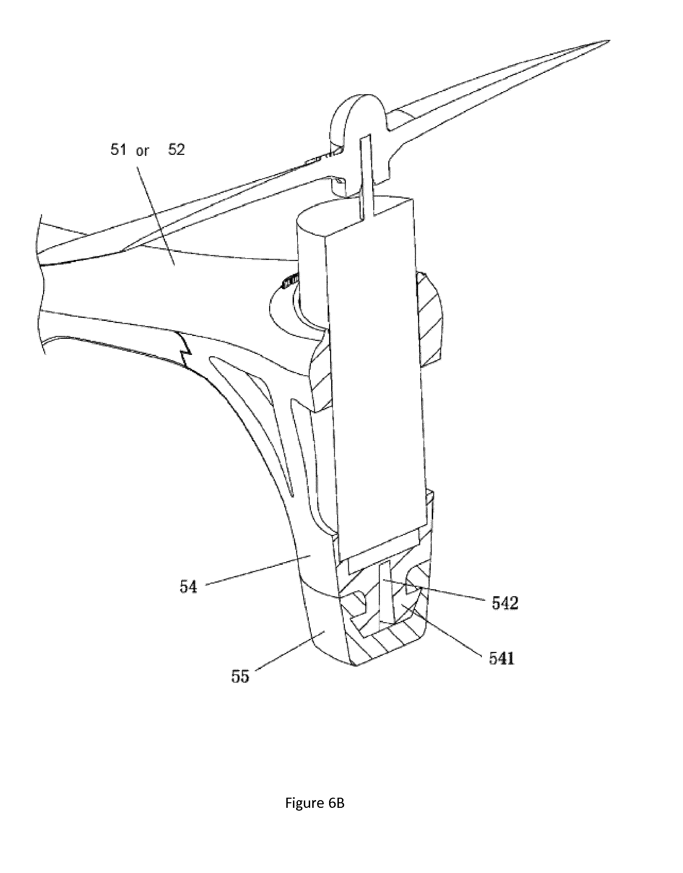

As shown in **Figs. 6A** **and** **6B****,** the lowest end parts of the first upper arm **51** and the second upper arm **52** of the upper cowling **5** are lower than the lowest end of the lower cowling **6** so as to form the start and landing support legs **54** for the four-rotor aircraft and a soft rubber mat **55** is provided on the base of the start and landing support legs **54.** A single-piece T-shaped chuck **541** is provided at the lower end of the start and landing support legs **54.** The soft rubber mat **55** is snapped into the T-shaped chuck **541** accordingly. A continuous cable groove **542** is further provided on the T-shaped chuck **541,** the continuous cable groove **542** being concealed within the soft rubber mat **55** so that the power cable running through the cable groove **542** is covered.

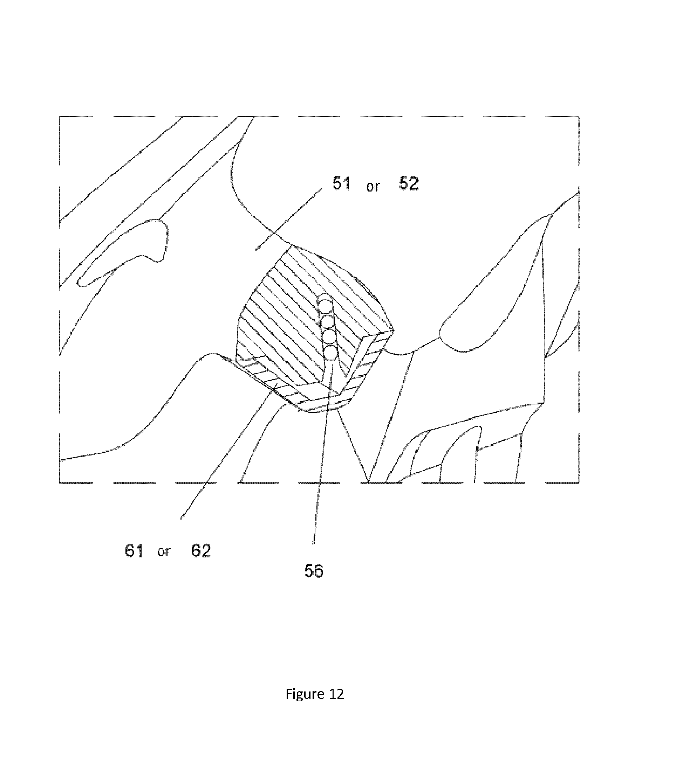

As depicted in **Fig. 12****,** a power cable receiving slot **56** is provided on the first upper arm **51** and the second upper arm **52** respectively, by means of which the end and the upper cowling **5** are connected. The size of the power cable receiving slot **56** corresponds to the size of the individual power cable. The power cable passes through the power cable receiving slot **56** and is secured and tensioned in the power cable receiving slot **56** so that the assembly of the upper cowling **5** and the lower cowling **6** is not impacted by the uncovering or releasing of the power cable. The power cable receiving slot **56** is connected to the cable groove **542** on the T-shaped chuck **541.** The first upper arm **51,** the second upper arm **52,** the first lower arm **61** and the second lower arm **62** have a triangular structure. The triangular structure increases the stability of the structure and greatly lowers aerodynamic drag, this being advantageous to the flight of the four-rotor aircraft.

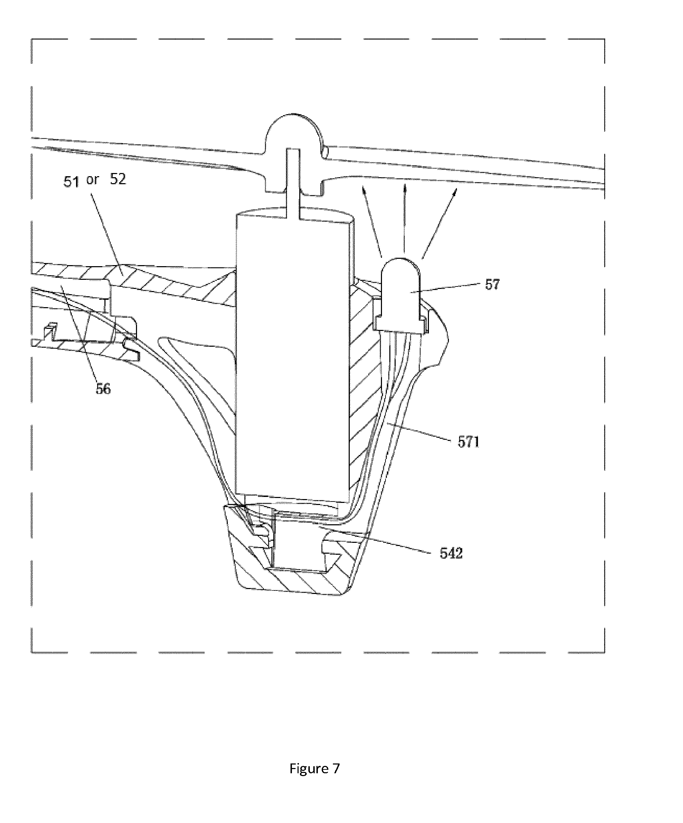

As depicted in **Fig. 7****,** an LED lamp **57** is disposed at each end of the first upper arm **51** and second upper arm **52** and each luminiferous end of the LED lamp **57** is positioned vertically upward so that the light emitted by the LED lamp **57** strikes the rotors so as to realize a better light effect. An insertion slot **571** for the cable of the LED lamp is provided on the outermost side of each end of the first upper arm **51** and the second upper arm **52.** The insertion slot **571** is connected to the cable groove **542** on the T-shaped chuck **541.** The cable of the LED lamp is inserted into the insertion slot **571** and connected to the upper cowling **5** via the cable groove **542** and the power cable receiving slot **56.**

As depicted in **Fig. 6A****,** a heat dissipation and weight reduction hole **58** is provided at each end **51a, 51b, 52a** and **52b** of the first upper arm **51** and the second upper arm **52** of the upper cowling **5** for the electric motor.

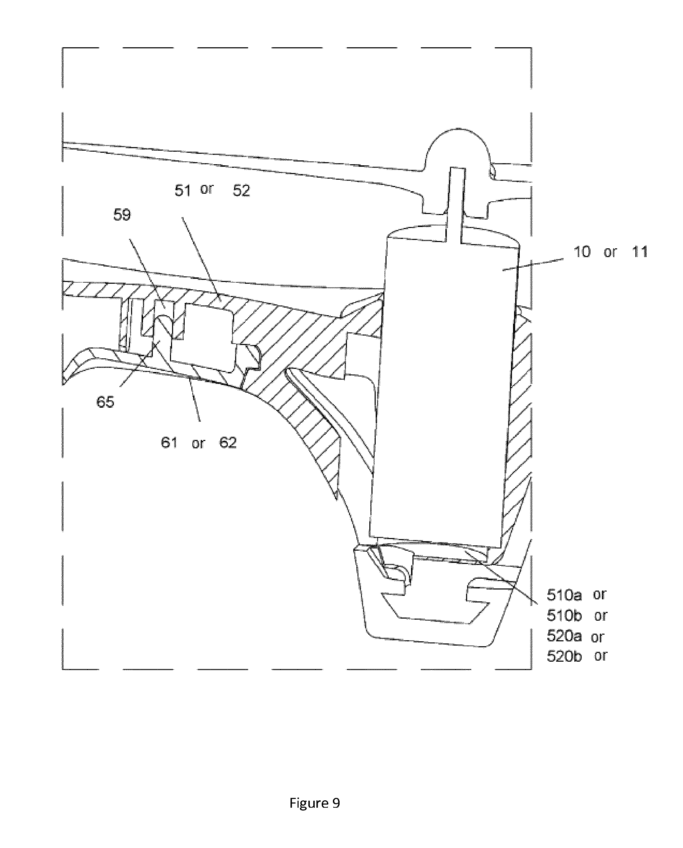

As **Fig. 9** shows, the inner diameter of the pocket **510a, 510b, 520a** and **520b** at each end of the first upper arm **51** and the second upper arm **52** for receiving the electric motors **10** and **11** is smaller than the caliber. There is interference fit between the electric motors **10** and **11** and the pockets **510a, 510b, 520a** and **520b** so that the electric motors **10** and **11** can be better secured.

As **Fig. 9** shows, the interfitting socket **59** and plug post **65** are provided on the first upper arm **51** and the second upper arm **52** of the upper cowling **5** and on the corresponding first lower arm **61** and second lower arm **62** of the lower cowling **6.** The corresponding plug post **65** between the first upper arm **51** and the first lower arm **61** plugs into the socket **59** and the corresponding plug post **65** between the second upper arm **52** and the second lower arm **62** plugs into the socket **59** by the securing design of the socket and plug post necessary for the assembly of the first upper arm **51** and the second upper arm **52** or the first lower arm **61** and second lower arm **62** respectively.

As depicted in **Fig.10****,** a cut-out hole **66** is provided on the lower cowling **6,** which is advantageous for heat dissipation and the lowering of the lower cowling **6.**

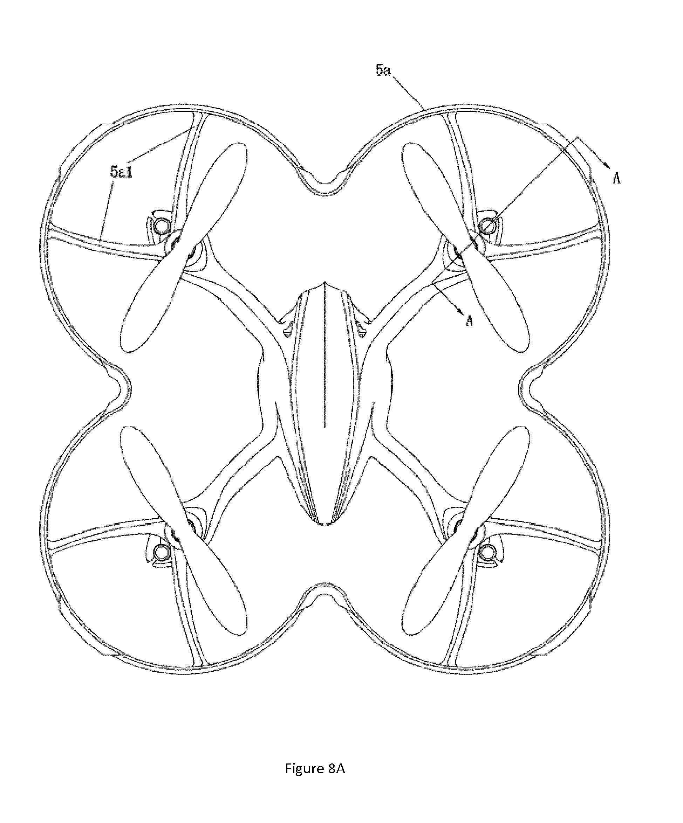

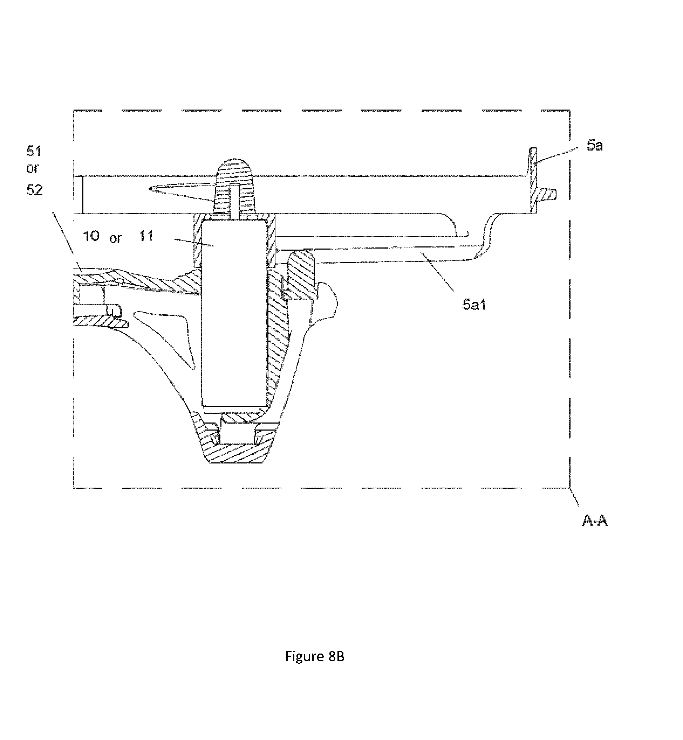

As depicted in **Figs. 8A** **and** **8B****,** the four-rotor aircraft also comprises a protective covering **5a,** with the rotors of the four-rotor aircraft being disposed within said protective covering **5a.** The mounting support **5a1** of the protective covering **5a** is attached to the part of the electric motors **11 and 10** projecting from the first upper arm **51** and the second upper arm **52.** The mounting support **5a1** of the protective covering **5a** is disposed beneath the rotors' surface of rotation. The protective covering **5a** protects the four-rotor aircraft from a fall and does not interfere with the rotation of the rotors.

The four-rotor aircraft described herein is, according to one or more embodiments, stable, wind-resistant, crash-resistant, agile and controllable.

When words such as "a," "an," "at least one" or "at least one part" are used in the claims, the claim is not limited to only one such feature unless specifically stated to the contrary in the claim.

### List of reference numerals

- **5**: upper cowling
- **6**: lower cowling
- **7, 8**: screws
- **9**: printed circuit board
- **10, 11**: electric motors
- **12**: battery
- **1, 2, 3, 4**: rotors
- **51, 52, 61, 62**: upper arm
- **53**: body
- **51a, 51b, 52a, 52b**: end
- **510a, 510b, 510, 520a, 520b**: pocket
- **66**: battery seating
- **660**: projection
- **670**: step
- **560**: slot
- **570**: recess
- **690**: rib(s)
- **17**: battery holder
- **171**: battery insertion opening
- **172**: elastic plug
- **18**: electronic video recording module
- **181**: camera
- **173**: camera mounting slot
- **64**: camera through hole
- **174**: jack bar
- **54**: start and landing support leg
- **55**: rubber mat
- **541**: single-piece T-shaped chuck
- **542**: cable groove
- **56**: power cable receiving slot
- **57**: LED lamp
- **571**: insertion slot
- **58**: heat dissipation and weight reduction hole
- **59**: socket
- **65**: plug post
- **5a**: protective covering
- **5a1**: mounting support

## Claims

1. A four-rotor aircraft comprising: an upper cowling **(5)** having a first upper arm **(51)** and a second upper arm **(52);** and a lower cowling **(6)** having a first lower arm **(61)** and a second lower arm (**62**),wherein the first upper arm **(51)** and the first lower arm **(61)** comprise a first upper shell and a first lower shell respectively, wherein the second upper arm **(52)** and the second lower arm **(62)** comprise a second upper shell and a second lower shell respectively, wherein the first upper shell is connected to the first lower shell, and wherein the second upper shell is connected to the second lower shell, and wherein the upper cowling **(5)** is thereby secured to the lower cowling **(6).**

2. The four-rotor aircraft according to claim 1, wherein at least one of the first upper shells and second upper shells comprise slots **(560)** and recesses **(570),** and at least one of the first lower shells and second lower shells comprise projections **(660)** and steps **(570),** and wherein the projections **(660)** engage with the slots **(560)** and the steps **(570)** engage with the recesses **(570).**

3. The four-rotor aircraft according to claim 1 or 2, wherein the lower cowling **(6)** comprises a battery seating **(66),** and wherein the battery seating **(66)** is designed to detachably connect the battery **(12)** to the lower cowling **(6).**

4. The four-rotor aircraft according to any one of claims 1 to 3, wherein the upper cowling **(5)** has a pocket **(51a, 51b, 52a, 52b)** at each end of the first upper arm **(51)** and second upper arm **(52),** and wherein the pocket **(510a, 510b, 520a, 520b)** is configured so as to accommodate one or more electric motor(s) in said pocket **(510a, 510b, 520a, 520b).**

5. The four-rotor aircraft according to any one of claims 1 to 4, wherein the four-rotor aircraft further comprises a printed circuit board **(9)** configured to: receive satellite and remote control signals; transmit signals to satellites and remote control devices; control the location, speed, heading and trajectory of the four-rotor aircraft; process image signals; or combinations thereof.

6. The four-rotor aircraft according to claim 5, wherein the printed circuit board **(9)** is mounted to the upper cowling **(5).**

7. The four-rotor aircraft according to any one of claims 1 to 6, wherein the four-rotor aircraft further comprises solar panels.

8. The four-rotor aircraft according to any one of claims 1 to 7, wherein the four-rotor aircraft moreover comprises two first electric motors **(11)** mounted on the first upper arm **(51)** and two second electric motors **(10)** mounted on the second upper arm **(52).**

9. The four-rotor aircraft according to claim 8, wherein the two first electric motors **(11)** of the four-rotor aircraft rotate clockwise and wherein the two second electric motors **(10)** rotate counter-clockwise, or wherein the two first electric motors **(11)** rotate counter-clockwise and the two second electric motors **(10)** rotate clockwise.

10. The four-rotor aircraft according to claim 9, wherein the rotors **(1, 2, 3, 4)** mounted on the respective first electric motor **(11)** and respective second electric motor **(10)** are covered.

11. The four-rotor aircraft according to claim 10, wherein the rotors (1, **4)** mounted on the respective first electric motor **(11)** are a mirror image of the rotors **(2, 3)** mounted on the respective second electric motor **(10).**

12. The four-rotor aircraft according to any one of claims 8 to 11, wherein the axis of the first electric motor **(11)** and the axis of the second electric motor **(10)** are parallel to each other and situated on the same cylindrical surface.

13. The four-rotor aircraft according to any one of claims 10 to 12, wherein the rotation of the rotors **(1, 2, 3, 4)** creates the lifting force.

14. The four-rotor aircraft according to any one of claims 1 to 13, wherein the four-rotor aircraft further comprises a battery **(12).**

15. The four-rotor aircraft according to claims 14, wherein the battery **(12)** is a rechargeable lithium-ion battery.

16. The four-rotor aircraft according to claim 14 or 15, wherein the battery **(12)** is designed such that it can be removably inserted on one side of the four-rotor aircraft.

17. The four-rotor aircraft according to any one of claims 14 to 16, wherein the lower cowling **(6)** further comprises one or more rib(s), and wherein the rib(s) are designed to prevent accidental release of the battery **(12)** from the four-rotor aircraft.

18. The four-rotor aircraft according to any one of claims 14 to 17, wherein the four-rotor aircraft moreover comprises a battery holder **(17),** and wherein the battery holder **(17)** is mounted in the lower cowling **(6),** and wherein the battery **(12)** disposed in the battery holder **(17),** and wherein the battery insertion opening **(171)** of the battery holder **(17)** is provided on the side of the four-rotor aircraft, and wherein the battery **(12)** is designed such that it can be removably inserted into the battery holder **(17)** through the battery insertion opening **(171),** and wherein an elastic plug **(172)** is arranged on the battery insertion opening **(171)** of the battery holder **(17),** and wherein the elastic plug **(172)** is designed so as to prevent the battery **(12)** from sliding out of the battery holder **(17).**

19. The four-rotor aircraft according to claim 18, wherein the four-rotor aircraft further com- prises an electronic video recording module **(18),** and wherein the electronic video recording module **(18)** comprises a camera **(181),** and wherein the electronic video recording module **(18)** is disposed on the lower cowling **(6),** and wherein the electronic video recording module **(18)** is arranged between the lower cowling **(6)** and the battery holder **(17),and** wherein a mounting slot **(173)** for the camera is provided on the battery holder **(17),** and wherein the camera is mounted into the camera mounting slot **(173),** and wherein a through hole **(64)** for the camera is provided on the lower cowling **(6),** and wherein the camera is passed through the camera through hole **(64),** and wherein the camera **(181)** is secured between the inner hole shoulder of the camera through hole **(64)** and the camera mounting slot **(173),** and wherein a jack bar **(174)** is provided on the side of the battery holder **(17)** corresponding to the lower cowling **(6),** and wherein the electronic video recording module **(18)** is positioned between the jack bar **(174)** and the lower cowling **(6).**

20. The four-rotor aircraft according to any one of claims 1 to 19, wherein the lowest end (**51a, 51b, 52a, 52b)** parts of the first upper arm **(51)** and the second upper arm **(52)** of the upper cowling **(5)** of the four-rotor aircraft are lower than the lowest end of the lower cowling **(6)** so as to form the start and landing support legs **(54)** for the four-rotor aircraft, and wherein a soft rubber mat **(55)** is provided on the base of the start and landing support leg **(54),** and wherein a single-piece T-shaped chuck **(541)** is provided at the lower end of the start and landing support leg **(54),** and wherein the soft rubber mat **(55)** is snapped into the T-shaped chuck **(541)** accordingly, and wherein a continuous cable groove **(542)** is further provided on the T-shaped chuck **(541),** and wherein the continuous cable groove **(542)** is concealed within the soft rubber mat **(55).**

21. The four-rotor aircraft according to claim 20, wherein a power cable receiving slot is provided on the first upper arm **(51)** and the second upper arm **(52)** respectively, by means of which the end **(51a, 51b, 52a, 52b)** and the upper cowling **(5)** are connected, and wherein the size of the power cable receiving slot corresponds to the size of the individual power cable **(56),** and wherein the power cable passes through the power cable receiving slot **(56)** and is secured and tensioned in the power cable receiving slot **(56),** and wherein the power cable receiving slot **(56)** is connected to the cable groove **(542)** on the T-shaped chuck **(541),** and wherein the first upper arm **(51),** the second upper arm **(52),** the first lower arm **(61)** and the second lower arm **(62)** have a triangular structure.

22. The four-rotor aircraft according to claim 21, wherein an LED lamp **(57)** is disposed at each end **(51a, 51b, 52a, 52b)** of the first upper arm **(51)** and second upper arm **(52),** and wherein each luminiferous end of the LED lamp **(57)** is positioned vertically upward, and wherein an insertion slot **(571)** for the cable of the LED lamp **(57)** is provided on the outermost side of each end **(51a, 51b, 52a, 52b)** of the first upper arm **(51)** and the second upper arm **(52),** and wherein the insertion slot **(571)** is connected to the cable groove **(542)** on the T-shaped chuck **(541),** and wherein the cable of the LED lamp is inserted into the insertion slot **(571)** and connected to the upper cowling **(5)** via the cable groove **(542)** and the power cable receiving slot **(56).**

23. The four-rotor aircraft according to any one of claims 4 to 22, wherein a heat dissipation and weight reduction hole **(58)** is provided at each end **(51a, 51b, 52a, 52b)** of the first upper arm **(51)** and the second upper arm **(52)** of the upper cowling **(5)** for the electric motor.

24. The four-rotor aircraft according to any one of claims 4 to 23, wherein the inner diameter of the pocket **(510a,510b, 520a, 520b)** at each end **(51a, 51b, 52a, 52b)** of the first upper arm (51) and the second upper arm (52) for receiving the electric motor is smaller than the caliber, and wherein there is interference fit between the electric motor and the pocket **(510a,510b, 520a, 520b).**

25. The four-rotor aircraft according to any one of claims 1 to 24, wherein the interfitting socket **(59)** and plug post **(65)** are provided on the first upper arm **(51)** and second upper arm **(52)** of the upper cowling **(5)** and on the corresponding first lower arm **(61)** and second lower arm **(62)** of the lower cowling **(6),and** wherein the corresponding plug post **(65)** between the first upper arm **(51)** and the first lower arm plugs into the socket **(59),** and wherein the corresponding plug post **(65)** between the second upper arm **(52)** and the second lower arm plugs into the socket **(59).**

26. The four-rotor aircraft according to any one of claims 1 to 25, wherein a cut-out hole **(66)** is provided on the lower cowling **(6).**

27. The four-rotor aircraft according to any one of claims 10 to 26, wherein the four-rotor aircraft also comprises a protective covering **(5a),** and wherein the rotors **(1, 2, 3, 4)** of the four-rotor aircraft are disposed within said protective covering **(5a),** and wherein the mounting support **(5a1)** of the protective covering **(5a)** is attached to the part of the electric motor projecting from the first upper arm **(51)** and the second upper arm **(52),** and wherein the mounting support **(5a1)** of the protective covering **(5a)** is disposed beneath the surface of rotation of the rotors **(1, 2, 3, 4).**
